# EUROPEAN PATENT SPECIFICATION

(11) **EP 1 836 008 B1**
(45) Date of publication and mention of the grant of the patent: **19.06.2013**
(21) Application number: 05816132.4
(22) Date of filing: 27.09.2005
(51) Int. Cl.: B09B 3/00, C02F 11/00, C04B 28/00, G21F 9/30

(54) **IN-CONTAINER MINERALIZATION**
MINERALISIERUNG IN EINEM BEHÄLTER
MINERALISATION DANS LE CONTENEUR

(30) Priority: 22.10.2004 US 972068
(43) Date of publication of application: 26.09.2007
(73) Proprietor: Studsvik, Inc., Erwin, Tennessee 37650 (US)
(72) Inventor: MASON, J. Bradley, McCall, ID 83638 (US); OLIVER, Thomas W., Fernandina Beach, Florida 32034 (US)
(74) Representative: Becker, Eberhard
(86) International application number: PCT/US2005/036228
(87) International publication number: WO 2006/047070

(56) References cited:
- WO-A-94/08661
- FR-A- 2 106 844
- GB-A- 2 048 555
- US-A- 4 726 916
- US-A- 5 085 838
- US-A- 5 096 692
- US-A- 5 387 738
- US-A- 6 133 498
- PATENT ABSTRACTS OF JAPAN vol. 013, no. 447 (C-642), 6 October 1989 (1989-10-06) -& JP 01 171685 A (MITSUI ENG & SHIPBUILD CO LTD), 6 July 1989 (1989-07-06)

## Description

### TECHNICAL FIELD OF INVENTION

The present invention relates generally to a process for promoting a chemical change of waste materials into a monolithic solid through the application of heat. In particular, this invention applies to the stabilization of hazardous wastes that require treatment prior to shipment, storage, and /or disposal.

### BACKGROUND OF THE INVENTION

Hazardous waste handling, transportation and disposal are heavily regulated activities. In particular, hazardous waste must be processed for disposal prior to shipment to the disposal site. Therefore, there is a need for processing methods to enable waste to meet disposal requirements prior to shipment.

There are currently many types of treatment processes for stabilizing hazardous waste including micro-encapsulation, macro-encapsulation, and heat-activation processes. In addition to the effectiveness of the stabilization processes, handling requirements and costs also have an impact on the type of treatment process selected by the waste generator. As requirements and costs increase, generators demand more effective and cost efficient means of waste treatment.

Hazardous wastes may be in the form of sludge, debris, wastes with high organic content, wastes with high nitrate or nitrogen containing content, wastes with high heavy metal content, radioactive wastes, asbestos, liquid solutions and slurries or solids. Examples of prior art methods for treating such wastes include US-A-4726916, which discloses a method in accordance with elements of claim 1, describes a method of immobilizing radioactive waste material by forming a containment vessel from a porcelain slip, mixing the radioactive waste with a ceramic-forming composition, depositing the radioactive waste/ceramic-forming composition mixture into the containment vessel, placing a porcelain slip cover over the containment vessel, and heating the covered vessel to solidify the vessel and the mixture therein. JP-A-01171685 describes a method for stabilizing a waste containing asbestos by adding an alkali compound to the waste and bringing them into a hydrothermal reaction at a specified temperature so that the waste is made nonacicular and caked to form a rock-shaped cake, WO-A-9408661 describes a method for eliminating the hazardous properties of asbestos waste by treating it with alkali and heat to crosslink the asbestos fibers and form a nontoxic, amorphous, silica aggregate. GB-A-2048555 describes a process for the containment of radioactive wastes that involves fixing the wastes in a high-alumina cement, firing to form an integral solid body and glazing the surface of the solid body, and wherein clay can be included with the cement to assist the glazing step. US-A-5085838 describes a process for converting asbestoform material into an environmentally safe material by heating the asbestoform material with an alkaline flux so as to change the crystalline structure of the asbestos to a different crystalline structure containing sodium.

Another means by which hazardous waste is currently stabilized utilizes a method in which a cement and the waste are mixed at ambient temperatures. Hydration and crystallization reactions occur upon the addition of water. These reactions lead to the formation of a monolithic solid in which the waste is chemically bound or encapsulated in the resulting matrix.

Still another treatment process is encapsulation. In encapsulation, polymeric reagents and waste are mixed. Heat is then applied to the mixture to melt the polymer reagent. As the mixture cools, thermosetting polymer reagents such as siloxane, sol-gel, and polyester form long-chain polymers that encapsulate waste in a monolithic solid. Alternatively, thermoplastic reagents such as polyethylene, paraffin, and bitumen may be used.

Heat activated vitrification, another stabilization process, uses glass to form a matrix for encapsulating the wastes. Glass frit or glass forming chemicals are combined with waste and melted to form a fluid mixture that solidifies upon cooling into an amorphous solid. The solidified, stabilized matrix is suitable for transportation and disposal.

Hydroceramic cement stabilization is yet another stabilization process, commonly used on hazardous nitrate waste. This process combines calcine compounds with reagents such as clay, sodium hydroxide, and vermiculite to form a hydroceramic mixture. The hydroceramic mixture is then mixed with nitrate-containing wastes to form a waste mixture. The waste mixture is heated to activate it. However, this process is limited in the proportion of nitrates that can be input. For example, the maximum nitrate level that can be efficiently immobilized is about 25% of the amount of the alkali metals present. If the amount of nitrates exceeds this alkali metal ratio, some of the nitrate will not be immobilized and can be readily leached from the solid matrix. Furthermore, heat activation temperatures must be kept below about 150°C to prevent decomposition of nitrates present in the waste.

Yet another heat activation treatment method involves premixing waste materials with additives. The resulting mixture is dried and sintered to achieve the final monolithic waste form. Sintering involves heating the waste and additives to a high enough temperature to partially melt or fuse the waste and additives into a monolithic solid. This method uses three separate operations in three separate process containers.

There is a need for a process for stabilizing hazardous wastes that is more effective and efficient for stabilizing wastes prior to transport, storage and disposal.

### SUMMARY OF THE INVENTION

Mineralization of waste in a suitable treatment container achieves the stabilization of waste materials in a single operation, namely heat treatment, and the product of this process is a stable monolithic final waste form. Furthermore, the treatment container is suitable for storage or direct disposal.

According to its major aspects, waste materials are heated in a treatment container. The heat induces a chemical change that causes the waste to form a solid monolithic mass. This mass may then be properly transported in the treatment container for disposal or storage. This single step process has significant advantages for hazardous waste treatment and handling.

Some hazardous wastes have high nitrate content. Another waste is magnesium hydroxide (magnox) rich sludges from reprocessing of spent nuclear fuel. This magnox sludge contains heavy metals, organics, and radioactive constituents that are treated to remove water and organics, to stabilize the heavy metals and radionuclides, and to form a qualified monolithic final waste form suitable for disposal. Another waste is asbestos that comprises magnesium and iron rich silicates. This waste is heat treated to stabilize asbestos so as to destroy the fibers and leave the asbestos residues immobilized in a stable solid matrix, thus eliminating the hazardous characteristics of asbestos fibers.

In the first embodiment of the present invention, waste material is transferred into a treatment container and mineralizing additives are added. The waste material and mineralizing additives are mixed, heated, and disposed of in the same treatment container after being allowed to cool. In the second embodiment of this invention, waste material and additives (including both mineralizing and reducing additives) are mixed in a separate vessel. After mixing, the mixture is placed in or injected or sprayed into the treatment container for heat treatment. The treatment container may also be used for transportation, disposal, and storage.

Generally the waste material/mineralizing additive mixture is heated to an activation temperature of at least 150° C but less than the fusion or melting temperature of a majority (50%), preferably substantially all, of the constituents of the mixture. Although the activation temperature is kept relatively low, stabilized minerals form. There is thus no need for heating to temperatures that will cause a majority of the mixture to vitrify, or melt thermosetting or thermoplastic materials. The heat treatment is used in part to vaporize any water in the waste. Heating the material to temperatures of at least 200°C will also result in the vaporization of most, preferably a majority (50%), more preferably substantially all, of the volatile organic compounds within the material. At temperatures greater than 400°C, most, preferably a majority (50%), more preferably substantially all, of the volatile and semi-volatile organic compounds will have vaporized, and at temperatures greater than 600°C, most, preferably at least a majority (50%), more preferably substantially all, of the nitrates will have vaporized, decomposed, or reduced directly to nitrogen gas. The heat source for the heat treatment of the mixture may be internal or external to the treatment container.

Importantly, because the additives are mineralizing agents that form a heat activatable mixture with the waste material, they cause this mixture in the treatment container to form stable, insoluble mineral crystals or phases when heated to their mineralization temperature range. Thus, the mineralization reactions of the present invention produce at least one crystalline mineral substance, and a final product in which preferably a majority, more preferably substantially all, of the mixture has been converted to a monolithic form.

Several types of mineralized product compounds may be formed in this process. Product compounds include sodium aluminosilicate, sodium silicate, sodium aluminate, sodium carbonate, sodium calcium silicate, calcium sulfate, calcium chloride, calcium fluoride, calcium phosphate, magnesium phosphate, sodium magnesium/iron silicates, sodium magnesium/iron silicate phosphates, and still others, such as compounds where sodium is substituted by potassium or other alkali metals. The type of product compounds resulting from the process depends on the mineralizing additives used and the composition of the waste.

The preferred mineralizing additives include aluminosilicates such as clays, zeolitc, silica gel, silica, silicates, phosphate compounds, calcium compounds, magnesium compounds, titanium compounds, iron compounds, and aluminum compounds. These additives combine with alkali metals in the waste to form nepheline, nosean, sodalite, fairchildite, natrofairchildite, dawsonite, elitelite, shortite, parantisite, maricite, buchwaldite, bradleyite, combeite, and numerous other similar mineral variations of these compound components. Certain wastes can be pretreated with an additive to facilitate mineralization. For example, asbestos can be at least partially dissolved in a caustic or acidic solution with the resultant partially dissolved slurry or solution being optionally mixed with other additives, and then the final mixture can be heat treated to form a non-hazardous, non-asbestos, non-fibrous mineralized monolith - all without melting the waste.

Generally water soluble alkali metal compounds in waste require further stabilization prior to disposal to prevent water dissolution, an undesirable characteristic because free water could lead to leaching and migration of waste material after the product is buried. Therefore, the production of water insoluble alkali metal compounds, such as Nosean and Nepheline, is preferred.

Reducing additives may also be mixed with the waste along with mineralizing additives to remove oxygen. Oxygen is present in the waste materials containing nitrates, nitrites, and other nitrogen oxides. Suitable reductants may include sugar, glycol, glycerol, ethylene carbonate, formic acid, alcohols, carbon, and a wide variety of other carbonaceous or organic compound reducing agents. Gas phase reductants may also be added to the mixture for reduction of nitrates and other unwanted waste material oxides. Additional metal reducing additives may also be mixed with the waste along with mineralizing additives to reduce certain waste constituents (mainly metals) to a lower, less water soluble form. For example, mercury can be reduced to mercury sulfide by addition of a reducing agent such as sodium sulfide, potassium sulfide, calcium sulfide, iron sulfate, hydrazine, formic acid, sulfuric acid, stannous chloride, and other similar reducing agents. In like manner, water-soluble chromium in a +6 oxidation state can be reduced to insoluble chromium in a +3 oxidation state by means of the metal reducing agents or by the reducing conditions generated by the use of the above mentioned nitrate reducing agents.

In a preferred embodiment of the invention, the waste material is pretreated by addition of a reducing agent or by dissolution in a mineralizing additive prior to optional mixing with other such additives. For example, asbestos can be partially dissolved by placing the asbestos in a hot caustic solution so that the asbestos fibers are destroyed by being at least partially dissolved prior to further treatment according to the first and second embodiment processes described above. The destructive of asbestos fibers can be performed in one or two steps. In the first step, the asbestos fibers are destroyed by at least partially dissolving them in a caustic solution, preferably a sodium hydroxide solution. The asbestos that is not completely dissolved in this step forms a non-fibrous, gelatinous residue and the asbestos solution containing this residue can then be mixed with additives, such as clay, and heated in a treatment container. Alternatively, the resulting residue can be treated with an acid solution, either separately or in the asbestos solution, to further dissolve the residue. The asbestos solution and the residue solution may then be mixed with additives and heat treated, either together in the same container or separately in different containers. For the second step, i.e., dissolution of the residue with an acid, the preferred acids include sulfuric acid, formic acid, oxalic acid, and phosphoric acid. Other organic and mineral acids also may be used. However, it is preferred that hydrofluoric, nitric and hydrochloric acids not be used for the second acid dissolution step as they contribute fluorides, nitrates and chlorides, respectively, to the waste material, which could adversely impact the quality of the stabilized product from the treatment process and the off-gas emissions from the treatment process.

Another preferred embodiment of heat-activated stabilization may be achieved by mixing the waste with additives that will partially react at ambient temperature to produce a mixture having a modified chemical composition and properties. The partially reacted mixture is then exposed to thermal treatment in a fluidized bed to form a granular waste product, such as an inorganic grit.. This granular product is subsequently solidified into a monolithic waste form in a treatment container in accordance with the present invention.

These embodiments and their advantages will be apparent to those skilled in the art of hazardous waste treatment from a careful reading of the Detailed Description of Preferred Embodiments as presented below.

### BRIEF DESCRIPTION OF THE DRAWINGS

The invention, both as to its process and the operation thereof, may be further understood by reference to the detailed description below taken in conjunction with the accompanying drawings, in which:

FIG. 1 is a diagrammatic illustration of one embodiment of a system for carrying out the process of the present invention;

FIG. 2 is a diagrammatic illustration of the multi-container heating unit of the system of Fig. 1; and

FIG. 3 is a diagrammatic illustration of another embodiment of a system for carrying out the process of the present invention.

### DETAILED DESCRIPTION OF PREFERRED EMBODIMENTS

The present invention is a process for converting waste into a monolithic solid suitable for transportation and disposal in accordance with claim 1, comprising mixing the waste with mineralizing additives and, optionally, reducing additives, to form a mixture, and then by heating the mixture to a temperature within a mineralization range. The present disclosure is described with respect to radioactive waste and asbestos waste but any nitrogen-containing, magnesium-containing, silicate-containing, calcium-containing, aluminum containing waste, alkali-containing wastes, chloride-containing waste, fluoride-containing waste, phosphorous- or phosphate-containing waste, and sulfur- or sulfate-containing waste, or output stream containing one or more of the foregoing wastes, can be processed using the methods and apparatuses described herein.

The terms "disposal container" and/or "treatment container" both refer generally to a relatively small container, holding preferably 0.03 to 1.42 cubic meters (1 to 50 cubic feet), more preferably 0.20 to 0.85 cubic meters (7 to 30 cubic feet), which is made for the purposes of containerizing wastes for disposal by shallow land burial (as opposed to a separate reaction or mixing vessel). The treatment and disposal container also is not designed for higher temperatures, say 1000° C or higher, but can withstand environments in which their temperature rises to 600°C to 750°C, or perhaps somewhat higher, without loss of structural integrity or geometry.

A preferred embodiment of the invention involves a single treatment and disposal container in which the waste material can be mixed with additives, heat treated and disposed of. Another preferred embodiment involves the use of a first container or other mixing vessel for mixing waste materials with additives, and a second container for heat treatment of this mixture. The waste/additive mixture can be placed, injected or sprayed into the treatment container, which optionally may be preheated to the desired treatment temperature. Spraying of some materials, such as those containing nitrogen oxide groups, to deposit the mixture in layers is preferred as it allows gases released by the heat treatment to escape without forming bubbles or voids in the monolith form. Prior to being sprayed or otherwise injected, the temperature of the waste/additive mixture may be adjusted to facilitate the spraying or other injection step. The heat treatment container may also be one that is acceptable for use as a storage and/or disposal container, in which the waste materials and additives, once fully heat treated, will form a mineralized monolithic solid acceptable for storage and/or disposal at an appropriate site. The reduced handling, and in particular, the reduced transferring of the waste from one container to another, is an important feature of the present invention.

The monolithic solid that is formed after heat treatment is a solid, sufficiently stable form for transportation and disposal without further treatment. The mineralized solid typically includes sodium aluminosilicates, sodium aluminosilicates with substituted chlorine, fluorine, phosphorus, sulfate, radionuclides, and heavy metals in the crystalline structure, sodium calcium silicate, calcium sulfate, calcium fluoride, calcium phosphate, magnesium phosphate, magnesium silicate, magnesium silicate phosphates, magnesium/iron silicate, magnesium/iron phosphates, and similar water-insoluble compounds, including alkali metals substituted for the sodium in the above list.

Stabilization as used in the present process is the conversion of waste materials into a substantially mineralized, substantially solidified and substantially monolithic form that has the following properties and/or characteristics:
- The solidified waste form satisfies treatment standards for heavy metal leach resistance.
- Radionuclides and other toxic and hazardous materials present in the waste are substantially immobilized in the solid monolithic waste form so that they satisfy disposal facility performance requirements.
- The solid monolithic waste form has structural and compositional characteristics that meet disposal requirements of applicable regulatory agencies, including requirements related to: compressive strength, porosity, permeability, leach resistance, oxidation resistance, friability, fungal and bacterial resistance, hydration resistance, integrity after thermal cycling, and dryness or lack of free liquids. Spraying of some waste/additive mixtures into an already heated (preheated) treatment container is preferred where it allows gases released by the heat treatment to escape without forming bubbles or voids in the monolith form. This will result in a monolithic waste form with higher density and compressive strength compared with treatment using bulk filling of the treatment container. Other waste and additive mixtures of the invention also may be sprayed or otherwise injected into preheated treatment containers.

Stabilization as defined for this invention does not include production of a monolith by typical cement or other methods of encapsulation, incorporation, bonding or binding where the monolith is formed by non-heat-activated means. For example, typical cement solidification processes turn the waste/cement mixture into monoliths by the growth of hydration bonds and/or crystallization at or near ambient temperatures. These chemical reactions may be slightly exothermic which may increase the temperature of the materials, but the reactions initiate at ambient temperatures, and temperatures signifcantly above ambient are not required to initiate the reactions.

Heat-activated as defined for this invention means that heat is applied to the mixture to initiate a mineralization reaction that will result in formation of a monolithic solid waste form. Although some mineralization reactions can partially occur at ambient temperature, i.e. without heat application that increases the material temperature, the extent of reaction is limited and would not produce a stabilized monolith. Heat-activation applies to methods of stabilizing waste mixtures where ambient temperature reactions are not sufficient to cause these mixtures to stabilize.

In addition, the heat-activation temperature is less than the melting point of most, preferably a majority, more preferably substantially all, of the waste materials and additives. This means that stabilized minerals can be formed without melting a majority of the wastes and additives, in contrast to the processes of vitrification, sintering, and thermosetting and thermoplastic encapsulation. Therefore, the present process takes place at less than the temperature of waste vitrification (melter) processes and sintering processes which operate at temperatures greater than 900°C, such that substantially all or at least a majority of the materials melt and/or fuse into a final waste form that becomes a monolithic solid upon cooling.

For example, if one were to mix magnesium hydroxide sludge with Portland cement and water in the right proportions at ambient temperature, one could achieve a monolithic solid of magnesium hydroxide and calcium carbonates and silicates. However, according to the invention, if magnesium hydroxide and Portland cement are mixed and heated to a temperature above approximately 600° C, the mineral magnesium-calcium-silicate would be formed, which has superior leach resistance and stability compared to a solid achieved by mixing magnesium hydroxide sludge with Portland cement at ambient temperature. Additionally, the Mg-Ca-Si mineral would occupy a smaller volume, as water and organics would have been eliminated in the higher temperature heat-activated stabilization. The reduced volume translates into greater savings in disposal costs and perhaps lower transportation costs as well.

Another example of the invention would be the denitration and mineralization of sodium nitrate containing wastes. If the sodium nitrate wastes are mixed with a reductant and one or more mineralization additives, but not heat activated, some denitration reactions and even some mineralization reactions may occur, but only very slowly, over a period of hours and days. In fact, monolithic stabilization will likely never be achieved without the introduction of sufficient heat. However, when heat is applied to the same mixture, at temperatures over 200°C, preferably over 400°C, the water in the waste is quickly evaporated, the majority, preferably substantially all, of the nitrates are converted to nitrogen gas by interaction with the reductants and reductant reaction and decomposition products, and the majority, preferably substantially all, of the inorganic components and alkali metals in the wastes are converted into crystalline mineral products in a monolithic waste form in a matter of seconds to hours depending upon the temperature used. Thus the present process makes rapid monolithic mineralization feasible, with corresponding increases in productivity.

A purpose of the present invention is to stabilize waste materials in a single operation in a single container, wherein following mixing of waste and additives in the container, the solidification, stabilization, and production of a monolithic final waste form are accomplished in the same container by the introduction of heat. Alternatively, the waste and additives can be mixed in a separate vessel and the mixture can be placed, injected or sprayed into the treatment container. In the alternative case, the treatment container can be at ambient temperature, but is preferably heated to treatment temperature before and/or during waste addition.

The inorganic constituents in the waste material, as well as any radionuclides, non-volatile heavy metals, Cl, F, S, and P compounds present in the waste, will be converted into stable minerals by the present process. The predominant mineralized products that are produced are listed below. These minerals are generally not water-soluble. The relative amount of each product compound is dependent upon the type of additives used and the inorganic composition of the waste, where the more complex compounds are shown with abbreviated chemical formulas for simplicity:
Sodium-aluminosilicate (Na2O-Al2O3-2SiO2, Na-Al-Si), including substituted N03, Cl, F, P, S compounds, metals, and heavy metals in the crystalline structure
Sodium silicate (Na2O-2SiO2)
Sodium aluminate (Na2O-2Al2O3)
Sodium calcium silicate (Na-Ca-Si)
Calcium sulfate (CaSO4)
Calcium fluoride (CaF2)
Calcium phosphate (Ca3(PO4)2)
Magnesium phosphate (MgKP04)
Magnesium calcium silicate (Mg-Ca-SiO2)
Magnesium silicate phosphate (Mg-SiO2-PO4
Magnesium calcium silicate phosphate (Mg-Ca-SiO2-PO4)
Magnesium iron silicate (Mg-Fe-SiO2)
Magnesium silicate (Mg-SiO2)

The preferred mineralizing additives include aluminosilicates (clays), silica gel, silica, silicates, phosphates, Ca, Mg, Ti, Fe, aluminum gel, and Al compounds that combine with alkali metals to form synthetic and naturally occurring minerals as listed above and below (Note: Only the main elemental constituents are listed for simplicity). In the event the waste material is deficient in alkali metal content, alkali metals compounds and hydroxides can also be added to provide for substantially complete mineralization of the waste:
Nepheline, Na-Al-Si
Nosean, Na-Al-Si-SO4
Camegieite, Na-Al-Si
Sodalite, Na-Al-Si, and substituted species with NaCl, NaN03, and NaF
Fairchildite, K-Ca-CO3
Natrofairchildite, Na-Ca-CO3
Dawsonite, Na-Al-CO3
Eitelite, Na-Mg-CO3
Shortite, Na-Ca-CO3
Parantisite, Na-Ti-Si
Maricite, Na-Fe-PO4
Buchwaldite, Na-Ca-PO4
Bradleyite, Na-Mg-PO4-CO3
Combeite, Na-Ca-Si
Na-PO4, Na2CO3, Na-Al, Mg-PO4, Na-Al-PO4, Na-Mg-PO4, Ca-Si, and Na-(Ca,Fe,Mg)-Si

The most environmentally stable minerals have been shown to be feldspathoids, Nepheline, Nosean, Sodalite, Carnegieite and related aluminosilicates, and these are thus most preferred.

The generation of water-insoluble sodium/potassium/aluminum/calcium/magnesium/phosphate/sulfide products is preferred. Thus, the generation of water-insoluble alkali metal products is very desirable. For this reason, the most preferred products are the water-insoluble species such as Nosean and Nepheline. The Nosean and related sodium aluminosilicate compounds form a crystalline, cage-like structure that has the ability to substitute and bind large atoms (such as cesium, technetium, and other radionuclides and heavy metals) within the crystalline structure to produce a highly leach-resistant product. The sodium aluminosilicate compounds have demonstrated that they have leach-resistance that is substantially better than the Land Disposal Restrictions (LDR) Universal Treatment Standard (UTS) limits for heavy metals. The Cl, F, P, and sulfates in wastes are also incorporated into the crystalline structure of the sodium aluminosilicate compounds. The present process can thereby effectively stabilize potential acid gases as well as inorganic materials.

In order to generate the alkaline earth mineralized compounds mentioned above, the following mineralizing additives can be used, each mineralizing additive would be added to the waste materials in the proportions needed to generate the desired higher melting point and water-insoluble compounds. In the following examples, sodium is used but the same is true of other alkaline metals such as potassium, cesium, etc. Other combinations of the mineralizing additives and waste constituents are anticipated as there are literally hundreds of variations of mineral forms with substituted mineral structures that all use the same elements:
- Addition of lime (CaO) or other Ca compounds such as calcium carbonate, calcium silicate or nitrate could provide conversion of alkaline earths to Ca rich final product, e.g. Natrofairchildite.
- Addition of magnesia (MgO) would produce minerals rich in magnesia, e.g. Eitelite.
- Addition of clays (aluminosilicates such as kaolin, bentonite, troy, etc) or zeolites or precursors to produce a Nepheline, Nosean or other related sodium aluminosilicates.
- Addition of only Al compounds including; aluminum nitrate, aluminum hydroxide or tri-hydrate Al(OH)3; aluminum gel, aluminum metal particles, etc. will produce a sodium-aluminate product compound. For wastes with a high silica content the product would be sodium aluminosilicates. In this case the aluminum additive and the silica in the waste form a synthetic clay that can then form alkali aluminosilicates with the alkali metals in the waste.
- Addition of alkali metal hydroxides will produce alkali-rich minerals that will tend to more easily form monolithic solids from wastes that are deficient in alkali metals. For example, addition of sodium hydroxide to asbestos (Mg/Fe-Silicates) will partially dissolve the asbestos fibers and then convert the Mg/Fe-Silicates into a monolithic, non-fibrous solid that is free of asbestos fibers.
- Addition of phosphate compounds produces bonded ceramic minerals such as Maricite, Buchwaldite, Bradleyite or other PO4 containing compounds. For waste feeds containing phosphate compounds, such as tri-butyl phosphate, the final solid product would be an inorganic phosphate as listed above. To bond with phosphate in the waste, it is preferred that a clay, silica, iron, or calcium additive be used to make a water-insoluble product.
- Addition of silica gel, silica, and/or sodium-silicate compounds produces a sodium silicate, magnesium silicate, sodium magnesium silicate product, or for wastes with a high aluminum content, the product would be sodium aluminosilicates. In this case the silica additive and the aluminum in the waste form a synthetic clay that can then form alkali aluminosilicates with the alkali metals.

Table 1, below, provides typical simplified reaction equations for formation of some of the mineralized products of the present invention. Generally, the minerals form larger structures with much large numbers of atoms than shown in Table 1, which is shown only as an example of the types of reactions that can occur.

**TABLE 1. Mineralization Chemistry For Converting Sodium, Potassium, Aluminum, Sulfates, Chlorides and Radionuclides into Sodium AluminoSilicates**

| | |
|---|---|
| Na + Al2O3-2SiO2 (Clay) | = Na2O-Al2O3-2SiO2 |
| Na + K + Al2O3-2SiO2 (Clay) | = NaKO-Al2O3-2SiO2 |
| Na + SO4 + Al2O3-2SiO2 (Clay) | = Na2SO4-Al2O3-2SiO2 |
| Na + Cl + Al2O3-2SiO2 (Clay) | = NaCl-Al2O3-2SiO2 |
| Na + F + Al2O3-2SiO2 (Clay) | = NaF-Al2O3-2SiO2 |
| Na + Al2O3 + SiO2 (Silica) | = Na2O-Al2O3-2SiO2 |

Reductants may also be mixed with the waste to assist in the removal of unwanted oxidized compounds. Oxygen is often present in the waste materials in the form of nitrogen oxides, such as nitrates and nitrites, as well the oxides of other elements. Reducing additives (or "reductants") that can be added to the waste materials can be essentially any solid or liquid that can remove oxygen from, the waste materials or change oxidation state of certain metals. Reductants can include: carbon and carbonaceous materials such as sugar, glycol, glycerol, ethylene carbonate, formic acid, alcohols, and a wide variety of other liquid or solid carbonaceous reductants, i.e. essentially any organic material. Reductants to be mixed with the waste materials can be miscible with the waste materials, soluble in water or other liquid, or solid and any combination of the above.

In addition to solid and liquid reductants that can be added to the waste material, gas-phase reductants such as carbon monoxide, methane, hydrogen or other gaseous carbonaceous materials can be injected or pumped into the treatment container to provide reduction of nitrates and other unwanted waste material oxides. Additional metal reducing additives may also be mixed with the waste along with mineralizing additives to reduce certain waste constituents (mainly metals) to a lower, less water-soluble form. For example, mercury can be reduced to mercury sulfide by addition of a reducing agent such as sodium monosulfide, potassium monosulfide, calcium sulfide, iron sulfate, hydrazine, formic acid, sulfuric acid, stannous chloride, and other similar reducing agents. In like manner, water-soluble chromium in a +6 oxidation state can be reduced to insoluble chromium in a +3 oxidation state by means of the metal reducing agents and/or by means of the carbonaceous reductions mentioned above.

Wastes containing nitrogen oxides require processing to remove these nitrogen oxides, to stabilize heavy metals and radionuclides, if present, and to remove organics in order to stabilize these wastes. For this type of waste, it is possible to mix the nitrogen oxide waste with a reductant and one or more mineralizing additives in a separate vessel. The mixture is then placed in a treatment container and heated. Preferably, the treatment container is preheated and the waste/additive mixture is then injected as a fluid stream or sprayed into the preheated treatment container. Alternatively, the mixing and heating can be accomplished in a single container, which may or may not be preheated,

The application of heat to the contents of the treatment container will initially cause any water to evaporate, thus drying the waste material. Continued heating will cause organics to volatize and/or pyrolyze, and nitrates and nitrites to decompose and be reduced to nitrogen. The reductant will serve to convert the nitrates and nitrites in the waste material to nitrogen gas with only relatively small amounts of gaseous nitrogen oxides being generated. The heat will also cause the waste materials and mineralizing additives to crystallize and bond into a solid monolithic final form. A specific example of this is the stabilization of wastes containing nitrogen oxide groups, including solutions that contain components, such as nitric acid, sodium nitrate, and other nitrates and nitrites. These wastes may also contain organics, heavy metals, sulfur, halogens, and radioactive materials. To stabilize this waste, it may be mixed with a reductant and a mineralization additive in a separate mixing container or vessel. Samples can be taken to verify the uniformity of the mixture and that the mixture contains the desired proportions of additive and waste material.

The mixture is then injected through a nozzle as a spray or small fluid stream into a preheated treatment container for heat-activation. The injected mixture forms relatively thin layers that are rapidly heated and mineralized as they contact the hot container and previously deposited hot mineral surfaces. The treatment container is heated by means of an internal or external heat source to initiate the chemical reactions. As the waste mixture is heated to its mineralization temperature, the water is evaporated and volatile organics vaporize first. As additional heat is applied, the semi-volatile organic compounds are thermally distilled through pyrolysis reactions, which break the long-hydrocarbon polymers and chains into more volatile gas-phase organics. The application of heat causes evaporation of nitric acid and thermal decomposition of nitrates and nitrites to form gaseous nitrogen oxides. The reductant(s) will react with the solid, liquid and gas-phase nitrogen oxide (NOx) and carbon components to form mainly nitrogen gas, carbon oxides (mainly carbon dioxide and some carbon monoxide) and water from the oxygen in the NOx components.

The application of heat further provides the energy needed for the inorganic components of the waste materials and additives to form mineral compounds that will effectively solidify a majority, preferably substantially all, of the waste into a final mineralized monolithic waste form. The specific minerals that form depend on the inorganic composition of the waste material and the choice and amount of the additive or additives used. For example, if clay were added as the mineralizing additive, a sodium aluminosilicate and other feldspathoid related minerals would be formed as the monolithic solid. If a silicate were used as the mineralizing additive, a sodium silicate mineral would be formed as the monolithic solid. If the waste had a high magnesium content and silica were added as the additive, a magnesium silicate would be formed as the monolithic solid. The sulfur and halogens, such as chlorine and fluorine, would also be mineralized to form Na2SO4, NaCl and/or NaF substituted sodium aluminosilicates or similar minerals. The heavy metals and radioactive components are also incorporated into the structure of the minerals of the monolith. It will be appreciated that heavy metals, halogens, sulfur, radionuclides and other undesirable constituents in the wastes can be mineralized into a stable monolithic waste form according to the teachings of the present invention.

The invention may be further understood by the following description of a test run that demonstrates its feasibility. A waste surrogate was prepared by mixing 1358 grams (g) of water, 270 g of NaOH and 303 g of NaNO3 in a plastic mixing vessel, and then adding to this surrogate waste in the mixing vessel 889 g of clay as an Al-Si mineralizing additive and 152 g of sucrose as a reducing additive (reductant). These five components were then mixed together in the mixing vessel with two drops of a non-silicon defoamer, which was organic-based and also served as a second reductant. This mixture of waste materials, mineralizing additive and reducing additives was then poured into a 500 ml steel can, which served as the treatment container.

The treatment container and its contents were placed into a furnace and heated up to 750°C at a rate of 10°C/minute, and then were held at 750°C for a two hour period, after which the container was removed from the furnace and allowed to cool. The final solid monolithic waste form resulting from this process was white in color and was hard to the touch. Mechanical action was required to break this monolith into pieces. A volume reduction by a factor of approximately two was observed from the initial waste and additive mixture volume to the volume of the final monolithic form. There were minimal nitrogen oxides (NOx) noticed in the off-gases generated during heating, thereby demonstrating the desired reduction of nitrates to nitrogen gas. The off-gases were vented to a hood and released to the atmosphere.

The following narrative describes a full-scale application of the invention wherein waste materials and mineralizing additives are combined into the desired mixture composition in a mixing tank or vessel stirred with an internal mixer. The fluid solutions are first placed into the mixing vessel and the solid materials are then metered into this vessel while mixing the fluid solutions to form a slurry. The fluids and solids may include mineralizing and/or reducing additives. The slurry of combined waste and additives is mixed until sufficiently homogeneous and then the contents of the mixing vessel are transferred to a metal or metal refractory lined treatment container. It is also feasible to perform the foregoing mixing step in this same metal treatment container so that only a single container is used for mixing, heat treatment and disposal. The treatment container is then heated to the desired mineralization temperature by means of external or internal heaters, which are preferably electrical although combustion-fired, microwave, induction heating or other suitable heating means are also suitable.

The treatment container heat-up time is controlled by adjusting the heat input from the heat source. The water is first evaporated from the waste/additive mixture. As the waste/additive mixture continues to heat-up, volatile organics are evaporated and then semi-volatile organics are pyrolyzed such that semi-volatile hydrocarbon molecules are thermally broken down into smaller sized fractions which are then volatized from the mixture. Once the water and volatiles are removed, the mixture generally becomes a solid monolith.

As heating is continued, the non-volatile waste constituents and the mineralizing additives react and combine into new, generally crystalline mineral structures that provide the strength in the monolith. The amount of crystal growth and bonding between the waste and additives and the porosity largely determines the strength and ultimate properties of the final post treatment monolithic waste form. The temperature of the heat treatment is dependent upon the waste constituents, the selection of mineralizing and reducing additives, and the desired final monolithic mineral form. The time of heat treatment is dependent upon the size of the treatment container and the cure time for the minerals to fully form. These times can vary from 1 hour to several days for a large monolith to fully mineralize,

The composition of each waste stream and additive mixture will need to be tested to verify the time and temperature that provide for the desired level of mineralization and conversion to the desired monolithic mineral form. The adequacy of the stabilization is determined by sampling the monolith and performing analytical tests to confirm that the properties of the monolith meet the requirements for disposal or storage. The treatment container is sealed after the desired monolith form has been achieved and cooled to near ambient temperature. The sealing device can be a simple snap-on lid or a more complex lid, such as seal welding a metal lid for certain more restrictive applications.

Off-gases from the treatment container are directed through an off-gas treatment system that is designed to remove trace particulates and residual acid gases and other volatiles of concern. If mercury has not been stabilized, it can volatize and will also need to be removed from the off-gas stream through adsorption or other approved process. Water vapors and volatile organics can be condensed and treated separately if desired. Purge gases are not required in the treatment container but can be used to help control the environment, such as using nitrogen or other inert gas to prevent accumulation of organic vapors in the container. An example of the hardware for stabilizing waste or other contaminated materials by mineralization in a treatment container and for handling off-gases generated by the process of the invention is shown in the drawings and described below.

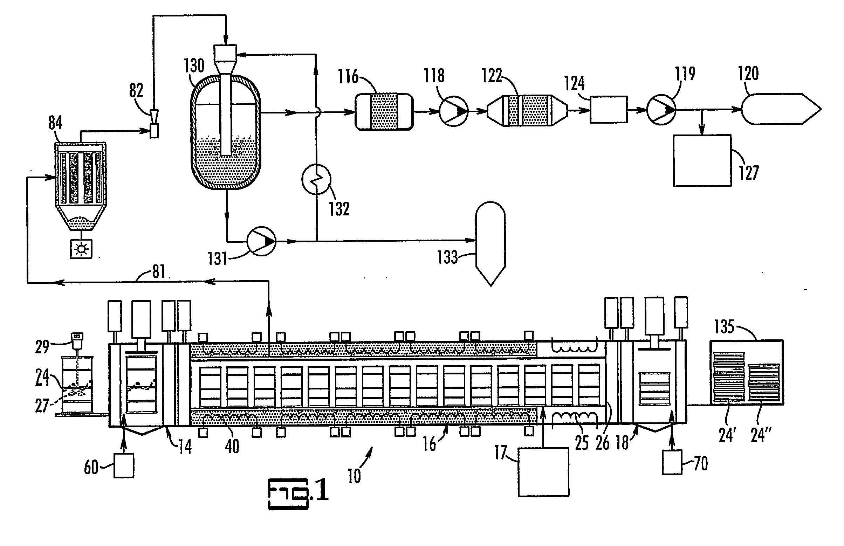

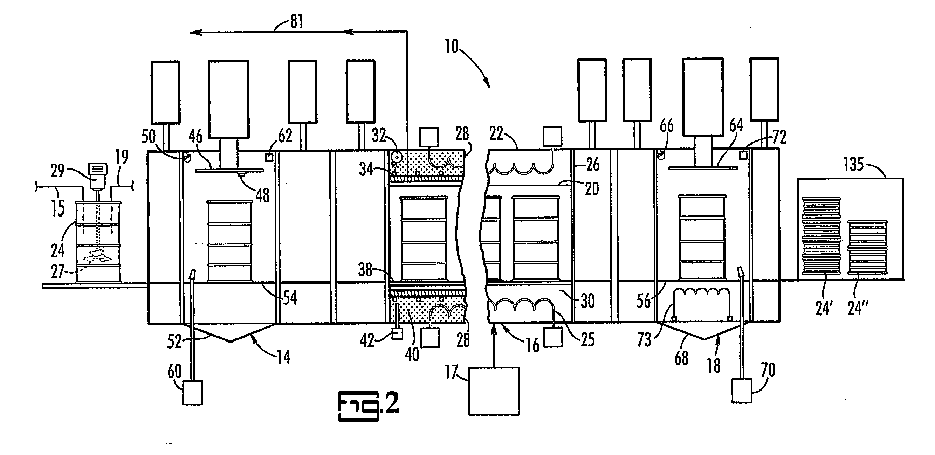

Referring now to FIGS. 1 and 2, there is shown a system for stabilizing waste or other contaminated materials for disposal by causing a chemical change thereof into a monolithic solid through mixing with an additive and the application of heat to this mixture. Although a separate mixing vessel (not shown) may be used before the mixture is deposited in a treatment container, the additive may instead be introduced with the material directly into a treatment container 24 and these components mixed by a mixer having a stirrer 27 driven by a motor 29. The system for processing the containerized waste may include a heating unit 10 and a condenser 130 according to a preferred embodiment of the present invention. Preferably, heating unit 10 includes an inlet chamber 14, a heating chamber 16, and an outlet chamber 18. These features are shown in detail in FIG. 2.

Plural treatment containers 24 are introduced into heating unit 10 for the volatizing of organics and mineralization of contaminants present in the mixture in treatment containers 24. Once the organics have been volatized into gases, a low flow gas purge from a purge gas supply 17 is used to sweep these off-gases out of the heating chamber 16 so that they can be further processed by an off-gas treatment system, such as that shown in fluid communication with heating unit 10. As illustrated, this off-gas treatment system includes a condenser 130. In condenser 130, the water vapor and organics present in the off-gas stream will condense into a liquid, which may be pumped downstream by a pump 131 for further processing, such as by a steam reformer 133 or for direct disposal via a liquid waste treatment facility. Optionally, the liquid condensate may be recirculated back to condenser 130 after passing through a chiller 132. The non-condensable gases from condenser 130 are discharged through a gas stack 120. Before being discharged, the non-condensable gas stream may go through a demister 116 for removal of liquid droplets. Next, a process blower 118 may send the demisted gas stream through a HEPA filter 122 and a granulated activated carbon (GAC) adsorber 124 before a ventilation blower 119 discharges the filtered gas stream through a gas stack 120. The HEPA filter 122 and the GAC adsorber 124 remove trace particulates and organics, respectively.

Focusing now on the heating chamber 16, FIG. 2 shows heating chamber 16 as being a dual-walled vessel, including an inner sleeve 20 and an outer vessel 22, which is preferably cylindrical in shape. Heating chamber 16 further includes a purge gas supply 17 that introduces inert and/or reactive purge gases to the interior of inner sleeve 20. Inner sleeve 20 of heating chamber 16 is dimensioned to receive plural treatment containers 24 of waste. Although the waste mixture may be contained within conventional 208.2-liter (55-gallon) disposal treatment containers made of steel, any container capable of holding wastes can be used in the process of the present invention. In an effort to make the system semicontinuous, a treatment container transfer mechanism 38 is provided within inner sleeve 20. Although other transfer mechanisms are contemplated, treatment container transfer mechanism 38 is preferably a walking beam or sliding inclined plane mechanism. Further, a conveyer type mechanism is also contemplated by the present invention. Inner sleeve 20 may be constructed of a high-temperature-resistant alloy suitable for contact with off-gases, which may include acid gases, hydrocarbon gases, and evaporated water from the contents of treatment containers 24.

Various features are included in heating chamber 16 to enhance its integrity and durability during the mineralizing processes. The outer vessel 22 is a pressure containment vessel that provides a secondary sealed barrier to the environment. Outer vessel 22 may further include a refractory jacket cover, an insulation jacket cover, and a metal shell. Further, outer vessel 22 is explosion resistant and designed to retain all gas expansion from over-pressure or off-normal events. An annulus 30 that is formed between the inner sleeve 20 and the outer vessel 22 serves as the dual containment barrier that will prevent loss of containment in the case of failure of the inner sleeve 20 integrity. A gas over-pressure can be maintained in the annulus 30. Further, a loss-of-pressure alarm 32 is provided in heating chamber 16 that will indicate a failure of the inner sleeve 20 integrity, e.g. a crack in the wall of inner sleeve 20, a poor or failed seal, etc. The integrity of inner sleeve 20 is enhanced by plural annular rings 34, which transfer the inner sleeve 20 load to the outer vessel 22. Annular rings 34 are preferably spaced approximately 45.72 centimeters (18 inches) apart to reduce sagging and stress on inner sleeve 20.

The heat source for the heating un it 10 is preferably an indirect heat source using conductive or radiative heat transfer such as electrical heaters 40 that are external to the inner sleeve 20, but that provide heat to the interior of inner sleeve 20. Most preferably, electrical heaters are ceramic-insulated and are located within the annulus 30. Optionally, combustion fired heat that is external to the inner sleeve 20 and within annulus 30 may be used. The term indirect heat source refers to a source of heat that is arranged external to inner sleeve 20 for providing heat to the interior of inner sleeve 30, or that is located within the interior of sleeve 20 but is sheathed, such as in an alloy tube, to prevent direct contact of the heat source with off-gases, such as organics, SOx, and NOx. The use of an internal electrical heater without sheathing that is located within inner sleeve 20 is also contemplated by the present invention.

As previously discussed, the use of indirect heat through conductive or radiative heat transfer is a particular feature of the present invention. Current methods that employ pyrolysis for the processing of hazardous wastes in treatment containers heat the wastes directly through internal combustion fired heat or through the introduction of hot gases into high temperature pyrolysis chambers. Through the use of indirect heating, both the gas flow and the gas composition inside the heating chamber 16 can be more readily controlled. The use of direct heating with hot input gases, for example, increases the volume of off-gases, as well as particulate carry out. Further, the use of heating that is external to inner sleeve 20 of heating chamber 16, or that is otherwise indirect, makes the process of the invention a non-incineration process, because there is no open flame or high temperature combustion in the heating chamber 16. The use of internal electrical heaters is also advantageous over other direct heating methods, in that such heaters do not introduce hot gases to the system as opposed to internal combustion type methods.

The heating chamber 16 is also adapted with features for managing the temperature within the chamber 16. A thermocouple instrument 42 is provided to control the temperature of heating chamber 16. In order to provide for thermal growth of inner sleeve 20 as compared with the fixed outer vessel 22 during container heating, a thermal expansion element 26 is included between the inner sleeve 20 and the outer vessel 22. Optionally, but preferably, an insulation layer 28 is provided within the annulus 30 to prevent the passage of heat out of the inner sleeve 20. As a further safety provision, both the thermocouple instrument 42 and the electrical heaters 40 are adapted so that they can be removed and replaced without having to enter the heating chamber 16.

Turning next to the inlet chamber 14 and outlet chamber 18 of the heating unit 10, FIG. 2 illustrates the various features of inlet chamber14 and outlet chamber 18 in detail. Preferably, both inlet chamber 14 and outlet chamber 18 include airlocks to isolate the atmosphere of the interior of heating unit 10 from that of its exterior. Further, inlet chamber 14 includes a treatment container transfer mechanism 54 to move treatment containers 24 from the airlocked inlet chamber 14 to heating chamber 16, and outlet chamber 18 includes a treatment container transfer mechanism 56 to move treatment containers 24 from heating chamber 16 into the airlocked outlet chamber 18. The use of both inlet and outlet airlocks and treatment container transfer mechanisms allows for a semi-continuous processing of the treatment containers 24. This feature is advantageous over other processes that use a strict batch operation.

As illustrated in FIG. 2, inlet chamber 14 may include a treatment container punch 46 and a treatment container filter application device 48 for the option where the waste and additive(s) are mixed and deposited in the treatment containers elsewhere and then closed with a lid for shipment to the treatment site. These features allow for the puncturing and placement of a filter on each of the treatment containers 24. Since there is processing of the wastes directly within the treatment containers 24, any closed treatment containers 24 must be punctured to form vent holes so as to allow all gases to escape from the treatment containers 24 during container heating. In situations where radioactive wastes are being processed, it is also important and advantageous to provide filters over the punctures in order to prevent carryover of radioactive particulates into the off-gas stream. The filters can include a sintered metal or ceramic disk or cylinder, or a cylinder or bag made of a flexible or sintered fabric or other media. The preferred filter includes a flexible ceramic fabric with a swage insert to seal the treatment container lid penetration or puncture so that gases in the treatment containers 24 must pass through the filter media. Optionally, the filter may also include a filter bag that is placed around the treatment containers 24. The filter device can be installed at the same time that the treatment container lid is punctured to open a vent path of evolved gases.

There also may be provided in the inlet chamber14 a washdown spray 50 with a drain or reservoir 52 to clean the interior of the airlock chamber of inlet chamber 14, as well as the exterior of treatment container 24 if closed before these treatment containers enter the heating chamber 16. Inlet chamber 14 may further include an inerting gas supply 60 for providing an inert environment for the treatment containers, and an oxygen analyzer 62 for detecting the presence of oxygen. Preferably, inlet chamber 14 can be monitored by remote means such as CCTV.

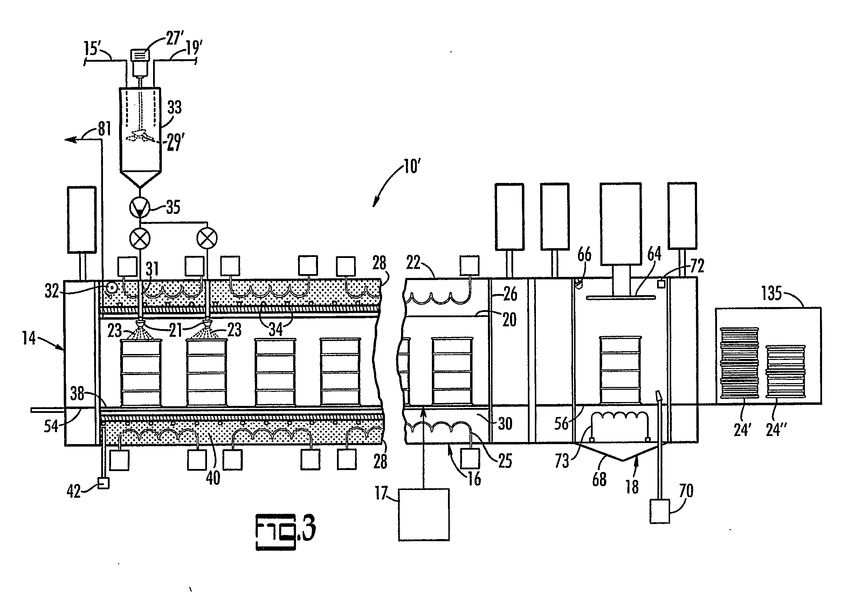

An alternative embodiment of the invention is shown in Fig. 3 wherein the waste and additives are premixed in a mixing vessel 33 by a stirrer 29' rotated or otherwise moved by a motor 27'. This mixture is then fed via a pump 35 and a feed line 31 to one or more spray nozzles 21 for disposition as a spray 23 into one or more preheated treatment containers or other treatment containers 24' in a modified heating unit 10'. Since the treatment containers 24' may be clean or at least uncontaminated with potentially harmful deposits, this embodiment eliminates the need for the inlet airlock chamber, treatment container punch 46, treatment container filter application device 48, washdown spray 50, inerting gas supply 60, oxygen analyzer 62 and related hardware as shown for the embodiment of Fig. 2. In Fig. 3, the same numerical designations are used for the same hardware components as also shown in Fig. 2 and described elsewhere in this specification.

As further shown in FIGS. 2 and 3, outlet chamber18 may include a compactor 64 for compacting treatment containers 24 into a size convenient for transport and storage, such as the compacted treatment containers 24' and 24" shown in a storage enclosure 135. The size of the compacted treatment container will necessarily depend on the mineralized solid monolith remaining in the treatment container after the heat treatment. Similar to inlet chamber 14, outlet chamber 18 may include a washdown spray 66 with a drain or reservoir 68 to clean the interior of the airlock surfaces. An inerting gas supply 70 is also included in outlet chamber 18 to provide for an inert atmosphere. To verify the completion of the mineralization process, outlet chamber 18 is further provided with an off-gas sample analyzer 72, which analyzes such materials as volatile organic carbon (VOC) and total hydrocarbon (THC). Optionally, a cooling device 73 is present in outlet chamber 18 to cool treatment containers 24 as they are being compacted.

To begin the in-treatment container waste processing method of the Fig. 2 embodiment, the waste material may be introduced via a feed line 15 and the mineralizing additive may be introduced via a feed line 19 directly into the individual treatment containers 24 and these ingredients then mixed in the containers by the stirrer 29 as rotated or otherwise moved by the motor 27. If closed treatment containers 24 containing this mixture are introduced into inlet chamber 14, they are first punctured to allow gases to escape during container heating. Both fully open (uncovered) treatment containers and punctured treatment containers may be provided with a filter over the opening to retain radionuclide particulates. The containers are then transferred into the inner sleeve 20 of heating chamber 16 where they are heated to mineralizing temperatures, which may range between 100 degrees C and 1000 degrees C, preferably between 200 degrees C and 900 degrees C, and more preferably between 600 degrees C and 850 degrees C.

Alternatively, to begin the in-treatment container waste processing method of the Fig. 3 embodiment, the waste material may be introduced via a feed line 15' and the mineralizing additive may be introduce via a feed line 19' into the mixing vessel 33 and these ingredients then mixed in the stirrer 29' as rotated or otherwise moved by the motor 27'. The pump 35 is then operated to feed this mixture to spray nozzles 21 for disposition into one or more preheated containers 24 as shown in Fig. 3. After the preheated containers are filled by the spray nozzles, they continue to be heated as they pass through the heating unit 10' until mineralization of the waste is completed. After leaving the heating chamber 16, the off-gas stream, which includes the volatized gases, proceeds towards the off-gas treatment system of Fig. 1 that is in fluid communication with the heating unit 10' via the off gas line 81.

The heating is preferably by electrical heaters 40 that are located within the annulus 30. The heating units 10 and 10' are preferably designed to fully volatize and remove greater than 99% of the organics from many waste streams, regardless of the organic composition. After volatization of organics and other volatile components is complete, the treatment containers 24 are transferred out of heating chamber 16 and into outlet chamber 18 in a semi-continuous mode, where they are prepared for shipping, which may include covering and/or compacting and placement in a storage facility 135. Before entering outlet chamber18 where they may be compacted, treatment containers 24 are preferably cooled in heating chamber 16, such as by cooling coils 25.

Organics with low to medium boiling points (less than 650 degrees C) will readily evaporate and form organic vapors that will flow out of the treatment containers 24 and into the off-gas stream. Organics with low boiling points are the source for volatile organic compounds (VOCs) found in the headspaces of many treatment containers 24. VOCs, therefore, may be fully removed from the waste and enter the off-gas stream. Typical heating unit 10 off-gases include water vapor, carbon monoxide, carbon dioxide, volatile hydrocarbons (organics), hydrogen, and hydrochloric acid.

Substantially all of the semi-volatile compounds of organics with high boiling points, such as high molecular weight polymers and plastics, are also volatized, preferably by exposure to temperatures above 650 degrees Centigrade (C), but below a temperature at which a majority of the mixture melts, such as 850 degrees C. The long carbon-hydrogen chain molecules break into smaller, more volatile organics, thereby gasifying most of the organic constituents. The thermal breakdown of the long polymers may leave behind a carbon-rich, inorganic char that is inert and non-volatile and is immobilized along with the undesirable contaminates.

Once the organics have been vaporized into what have been described as the off-gases, low flow gas purge from the purge gas supply 17 is used to sweep the off-gases out of the heating chamber 16 so that they can be further processed by an off-gas treatment system, which may include steam reformer 133. The purge gases can include steam, carbon dioxide, and inert gases in any mixture. Purge gas flow rate can be provided to achieve 1 to 100 volumetric changes of gas per hour, and, preferably, the purge gas flow rate is 4 to 10 volumetric changes of gas per hour. The preferred purge gas contains carbon dioxide, which can react with any corrosives and reactive metals present in the waste to form stable, non-hazardous carbonate salts. Purge gas is forced to enter the treatment containers 24 by means of purge gas pressure swings in the inner sleeve 20 of heating chamber 16. The pressure of the purge gas can be cycled in the heating chamber 16 by means of increasing or decreasing the eductor motive gas flow of a downstream eductor 82. The eductor 82 draws a vacuum on heating chamber 16 and, therefore, draws the gases out of the heating chamber 16. A higher eductor motive flow equates to higher vacuum in the heating chamber 16. The cyclical pressure swings cause the low flow purge gases to pass in and out of the treatment containers 24, through the treatment container filters if provided, at a controlled rate and velocity. These pressure swings range preferably from -50.8 centimeter water column to -254 centimeter water column (-20 inch water column to -100 inch water column.)

The use of low flow, cycle pressure swings in purge gas rates is a particular feature of the present invention, By avoiding the input of hot gases, as often used by current purge methods, the quantity and composition of the purge gas in the heating chamber 16 can be regulated to provide minimal flow rates. This reduction in the volume, and hence the reduction of velocity of gases, will minimize the agitation and subsequent carryover of particulates out of the treatment containers 24 and into the off-gas system. This feature is especially advantageous when certain radioactive wastes are being processed, because the build up of radioactive particles in the off-gas system could result in a loss of criticality control, as well as the build-up of radiation levels in the off-gas system.

After leaving the heating chamber 16, the off-gas stream, which includes the volatized gases, proceeds towards the off-gas treatment system that is in fluid communication with the heating unit 10 via an off gas line 81. As a form of back-up protection to prevent radionuclides from going airborne, in line 81 downstream from the heating chamber 16 is provided a ceramic filter 84. After passing through ceramic filter 84, the off-gas stream is next sent to the eductor 82 where it is mixed with steam and then introduced into the condenser 130.

In condenser 130, the water vapor and organics present in the off-gas stream will condense into a liquid, which may be pumped downstream by the pump 131 for further processing, such as by a steam reformer 133, or for direct disposal via a liquid waste treatment facility. Optionally, the liquid condensate may be recirculated back to condenser 130 after passing through the chiller 132. The non-condensable gases from condenser 130 are discharged through the gas stack 120 after passing through the demister 116, the process blower 118, the HEPA filter 122, the GAC filter 124 and the ventilation blower 119, which discharges the filtered gas stream through the gas stack. Pressure cycle swings in the heating unit 10 may also be provided or enhanced by varying the speed of, and hence the vacuum produced by, the process blower 118. A stack monitor 127 is provided to monitor any trace radionuclide particles in the gas stream as it is being discharged from gases stack 120. Although not shown, a continuous emission monitoring system (CEMS) is preferably also provided for the monitoring of this gas stream.

Another typical waste material is Magnox (magnesium hydroxide) rich sludge from reprocessing of spent nuclear fuel. The Magnox sludge contains heavy metal, organic and radioactive constituents that must be treated to remove the water and organics, stabilize the heavy metals and radionuclides and form a monolithic final waste form that is qualified and suitable for disposal. With Magnox wastes, there are usually minimal nitrates so a reductant is not normally used. One or more mineralizing additives, such as clay, phosphate, silica or sodium silicate compounds, are added to these wastes to form a monolithic structure during heat treatment. For example, the clay would bind the heavy metals and radionuclides and the silica, phosphate, and/or sodium-silicate compounds would mineralize the magnesium and form the base structure of the monolithic final waste form. In this case it may be necessary to add caustic (sodium hydroxide) to provide full mineralization of the heavy metals and radionuclides with the clay via formation of sodium aluminosilicate.

In an additional preferred embodiment of the invention, waste asbestos is made non-hazardous without vitrification. The treatment of asbestos can be performed in two or three steps. First, asbestos can be partially dissolved by placing the asbestos in a hot caustic (sodium hydroxide) solution so that the silica in the asbestos fibers is partially to substantially dissolved. Although partial dissolution destroys the fibers, it leaves a gelatinous residue. The optional second step involves dissolution of this residue by contacting it with an acidic solution. This second step may be necessary if temperatures less than 200°C are used when heating the treatment container. The partially dissolved asbestos solution from the caustic step and/or the substantially completely dissolved asbestos solution from the optional acid step may then be mixed with another mineralizing additive, such as iron oxide, phosphate or calcium oxide, although in some instances the caustic and/or acid used may alone serve as the mineralizing additive. The dissolved asbestos and mineralizing additives are then treated by heating the treatment container to preferably about 400°C to 600°C until a majority, preferably substantially all, of the mixture, is converted into a Na-Mg-Fe-Ca-Silicate mineral solid if calcium and/or iron additives are used, or if there is sufficient calcium and/or iron already present in the asbestos waste.

## Claims

1. A process for stabilizing a material containing nitrogen oxide groups wherein said process comprises steps of mixing (27,29) the material with a mineralizing additive to form a heat-activated, mineralizable mixture, and applying sufficient heat (16,40) to said mixture in a treatment container (24) to cause at least a portion of said mixture to mineralized and form a monolithic mineralized solid; wherein said heat applying step (16,40) heats said nitrogen oxide containing material to a temperature sufficient to convert at least 50% of the nitrogen oxide groups to nitrogen containing gas.

2. The process of claim 1, further **characterized in that** Said mineralizing additive comprises calcium, phosphorus, magnesium, silicon, aluminum, an alkali metal, iron, titanium, a compound of at least one of said elements, an aluminosilicate compound, clay, or a combination of two or more thereof.

3. The process of claim 1, further **characterized in that** said material comprises asbestos and said additive is sodium hydroxide.

4. The process of claim 1 wherein said process comprises steps of mixing (27,29) the material and a caustic solution containing an alkali metal as a mineralizing additive to form a heat-activated, mineralizable mixture, and applying sufficient heat (16,40) to said mixture in a treatment container (24) to cause at least a portion of said mixture to mineralize and form a non-fibrous mineralized solid having a monolithic form wherein said material contains fibers of asbestos and said caustic solution is allowed to at least partially dissolve said asbestos so that said mixture contains a residue from said partial dissolution, and said process further comprises a step of contacting said residue with an acidic solution to at least partially dissolve said residue prior to said heating step.

5. The process of claim 4, further **characterized in that** prior to said contacting step said residue is separated from said mixture and said separated residue is contacted with said acidic solution to dissolve at least a portion thereof and form an acidic residue solution, and then said acidic residue solution is added to said mixture before said heating step.

6. The process of claim 4, further **characterized in that** said process comprises a step of adding a second mineralizing additive to said mixture, said second mineralizing additive being selected to facilitate formation of said monolithic solid.

7. The process of claim 6, further **characterized in that** said second mineralizing additive comprises calcium, phosphorus, magnesium, silicon, aluminum, an alkali metal, iron, titanium, a compound of at least one of said elements, an aluminosilicate compound, clay, or a combination of two of more thereof.

8. The process of claim 4 further **characterized in that** said process comprises dissolving a first portion of said material in said caustic solution, dissolving a second portion of said material in said acidic solution, and combining said solutions containing portions of said material to form said heat-activated, mineralizable mixture.

9. The process of claim 8, further **characterized in that** said process comprises a step of adding a second mineralizing additive to said mixture, and said second additive comprises calcium, phosphorus, magnesium, silicon, aluminum, an alkali metal, iron, titanium, a compound of at least one of said elements, an aluminosilicate compound, clay, or a combination of two or more thereof.

10. The process of claim 1 wherein said material and said additive are mixed in a separate mixing container or vessel (33) to provide a transferable mixture, and said treatment container (24) is preheated (16,40) and said transferable mixture is sprayed (21,23) into said preheated container (24) to form a monolithic mineralized solid.

11. The process of any one of claims 1 to 10, further **characterized in that** sufficient heat is applied in said heating step to cause a majority of said mixture to be mineralized and form a monolithic, mineralized solid.

12. The process of any one of claims 1 to 10, further **characterized in that** sufficient heat is applied in said heating step to cause essentially all of said mixture to be mineralized and form a monolithic, mineralized solid.

13. The process of any one of claims 1 to 10, further **characterized in that** said material and said mineralizing additive are mixed in said treatment container.

14. The process of any one of claims 1 to 10, further **characterized in that** said material contains water and said heat applying step heats said mixture to a temperature sufficient to evaporate essentially all of said water, but below a temperature at which a majority of said mixture melts.

15. The process of any one of claims 1 to 10, further **characterized in that** said material contains water and volatile organic compounds, and said heat applying step heats said mixture to a temperature sufficient to evaporate essentially all of said water and to volatize essentially all of said volatile organic compounds, but below a temperature at which a majority of said mixture melts.

16. The process of any one of claims 1 to 10, further **characterized in that** said heat applying step heats said mixture to a temperature above 400° C, but below a temperature at which a majority of said mixture melts.

17. The process of any one of claims 1 to 10, further **characterized in that** said material contains water and semi-volatile organic compounds, and said heat applying step heats said mixture to a temperature sufficient to evaporate essentially all of said water and to volatize essentially all of said semi-volatile organic compounds, but below a temperature at which a majority of said mixture melts.

18. The process of any one of claims 1 to 10, further **characterized in that** said heat applying step heats said mixture to a temperature in the range of 600° C to 850° C.

19. The process of any one of claims 1 to 10, further **characterized in that** said process comprises adding a reducing agent to said mixture.

20. The process of claim 19, further **characterized in that** said reducing agent comprises carbon or an organic material.

21. The process of claim 19, further **characterized in that** said reducing agent comprises sugar, glycol, glycerol, ethylene carbonate, alcohols, other carbonaceous compounds, or a combination of two or more thereof.

22. The process of claim 19, further **characterized in that** said reducing agent comprises a gaseous compound.

23. The process of claim 19, further **characterized in that** said reducing agent comprises sodium sulfide, potassium sulfide, calcium sulfide, iron sulfate, hydrazine, formic acid, sulfuric acid, stannous chloride, other metal reducing agents, or a combination of two or more thereof.

24. The process of any one of claims I to 10, further **characterized in that** said material comprises heavy-metal containing waste, sulfur containing waste, halogen containing waste, radionuclide containing waste, asbestos containing waste, alkali metal containing waste, organic compound containing waste, or a combination of two or more thereof.

25. The process of any one of claims 1 to 10, further **characterized in that** said mineralizing additive is selected to produce a monolithic solid containing feldspathoid minerals, aluminum and silicate containing minerals, or a combination thereof.

26. The process of any one of claims 1 to 10, further **characterized in that** said mineralizing additive is selected to produce a monolithic solid containing calcium-rich minerals, phosphate-rich minerals, titanium-rich minerals, magnesium-rich minerals, iron-rich minerals, silica-rich minerals, aluminum-rich minerals, or a combination of two or more thereof.

27. The process of any one of claims 1 to 10, further **characterized in that** said treatment container is a disposal container.

28. The process of claim 27, further **characterized in that** said mixing step takes place in said disposal container.

29. The process of any one of claims 3 to 10, further **characterized in that** said material contains nitrogen oxide groups, and said additive has a composition for converting at least 50% of said groups to nitrogen gas.

30. The process of claim 1, 2 or 29, further **characterized in that** said additive is a reducing agent for converting substantially all of said groups to nitrogen gas.

31. The process of claim 1, 2 or 29, further **characterized in that** said additive is a reducing agent comprising carbon or an organic material.

32. The process of any one of claims 1 to 9, further **characterized In that** said material and said additive are mixed (27',29') in a separate mixing container or vessel (33) to provide a transferable mixture, and wherein said treatment container (24) is preheated (16,40) and said transferable mixture is injected (31,35) into said preheated container (24).

33. The process of claim 32, wherein said transferable mixture is sprayed (21,23) into said preheated container (24) to form a monolithic mineralized solid.

34. The process of any one of claims I to 10, further **characterized in that** said heating step is carried out while said mixture is maintained under at least a partial vacuum (82).

35. The process of any one of claims I to 10, further **characterized in that** said heating step is carried out at a temperature less than the fusion or melting temperature of at least 50% of the constituents of said mixture.

36. The process of claim 10 or 33, further **characterized in that** said monolithic solid is formed by successive layers of mineralized solids.

## Patentansprüche

1. Verfahren zum Stabilisieren eines Stickstoffoxidgruppen enthaltenden Materials, wobei das Verfahren die Schritte umfasst
Mischen (27, 29) des Materials mit einem Mineralisierungszusatzstoff, um eine wärmeaktivierte, mineralisierbare Mischung zu bilden, und
Anwenden von ausreichend Wärme (16, 40) auf die Mischung in einem Behandlungsbehälter (24), um zumindest einen Teil der Mischung dazu zu veranlassen zu mineralisieren und einen monolithischen, mineralisierten Feststoff zu bilden,
wobei in dem Schritt der Wärmeanwendung (16, 40) das Stickstoffoxid enthaltende Material auf eine Temperatur erwärmt wird, die ausreichend ist, um mindestens 50 % der Stickstoffoxidgruppen in Stickstoff enthaltendes Gas umzuwandeln.

2. Verfahren nach Anspruch 1, ferner **dadurch gekennzeichnet, dass** der Mineralisierungszusatzstoff Kalzium, Phosphor, Magnesium, Silizium, Aluminium, ein Alkalimetall, Eisen, Titan, eine Verbindung von mindestens einem der vorgenannten Elemente, eine Aluminosilikat-Verbindung, Ton oder eine Kombination aus zwei oder mehreren davon umfasst.

3. Verfahren nach Anspruch 1, ferner **dadurch gekennzeichnet, dass** das Material Asbest umfasst und der Zusatzstoff Natriumhydroxid ist.

4. Verfahren nach Anspruch 1, wobei das Verfahren die Schritte umfasst
Mischen (27, 29) des Materials und einer kaustischen Lösung, die ein Alkalimetall als einen Mineralisierungszusatzstoff enthält, um eine wärmeaktivierte, mineralisierbare Mischung zu bilden, und
Anwenden von ausreichend Wärme (16, 40) auf die Mischung in einem Behandlungsbehälter (24), um zumindest einen Teil der Mischung dazu zu veranlassen zu mineralisieren und einen nicht-faserförmigen, mineralisierten Feststoff mit einer monolithischen Form zu bilden,
wobei das Material Asbestfasern enthält und die kaustische Lösung das Asbest zumindest teilweise auflösen darf, sodass die Mischung einen Überrest von der teilweisen Auflösung enthält, und das Verfahren ferner einen Schritt eines Kontaktierens des Überrests mit einer sauren Lösung umfasst, um den Überrest vor dem Erwärmungsschritt zumindest teilweise aufzulösen.

5. Verfahren nach Anspruch 4, ferner **dadurch gekennzeichnet, dass** vor dem Kontaktierungsschritt der Überrest von der Mischung getrennt wird und der abgetrennte Überrest mit der sauren Lösung in Kontakt gebracht wird, um zumindest einen Teil dessen aufzulösen und eine saure Überrestlösung zu bilden, und die saure Überrestlösung dann der Mischung vor dem Erwärmungsschritt hinzugefügt wird.

6. Verfahren nach Anspruch 4, ferner **dadurch gekennzeichnet, dass** das Verfahren einen Schritt umfasst, in dem der Mischung ein zweiter Mineralisierungszusatzstoff hinzugefügt wird, wobei der zweite Mineralisierungszusatzstoff so gewählt wird, dass eine Bildung des monolithischen Feststoffs gefördert wird.

7. Verfahren nach Anspruch 6, ferner **dadurch gekennzeichnet, dass** der zweite Mineralisierungszusatzstoff Kalzium, Phosphor, Magnesium, Silizium, Aluminium, ein Alkalimetall, Eisen, Titan, eine Verbindung von mindestens einem der vorgenannten Elemente, eine Aluminosilikat-Verbindung, Ton oder eine Kombination aus zwei oder mehreren davon umfasst.

8. Verfahren nach Anspruch 4, ferner **dadurch gekennzeichnet, dass** das Verfahren ein Auflösen eines ersten Teils des Materials in der kaustischen Lösung, ein Auflösen eines zweiten Teils des Materials in der sauren Lösung und ein Kombinieren der Teile des Materials enthaltenden Lösungen umfasst, um die wärmeaktivierte, mineralisierbare Mischung zu bilden.

9. Verfahren nach Anspruch 8, ferner **dadurch gekennzeichnet, dass** das Verfahren einen Schritt umfasst, in dem der Mischung ein zweiter Mineralisierungszusatzstoff hinzugefügt wird, und der zweite Mineralisierungszusatzstoff Kalzium, Phosphor, Magnesium, Silizium, Aluminium, ein Alkalimetall, Eisen, Titan, eine Verbindung von mindestens einem der vorgenannten Elemente, eine Aluminosilikat-Verbindung, Ton oder eine Kombination aus zwei oder mehreren davon umfasst.

10. Verfahren nach Anspruch 1, wobei das Material und der Zusatzstoff in einem getrennten Mischbehälter oder -gefäß (33) gemischt werden, um eine transferierbare Mischung bereitzustellen, und der Behandlungsbehälter (24) vorgewärmt (16, 40) wird und die transferierbare Mischung in den vorgewärmten Behälter (24) gesprüht (21, 23) wird, um einen monolithischen, mineralisierten Feststoff zu bilden.

11. Verfahren nach einem der Ansprüche 1 bis 10, ferner **dadurch gekennzeichnet, dass** in dem Erwärmungsschritt ausreichend Wärme angewendet wird, um einen Großteil der Mischung dazu zu veranlassen, mineralisiert zu werden und einen monolithischen, mineralisierten Feststoff zu bilden.

12. Verfahren nach einem der Ansprüche 1 bis 10, ferner **dadurch gekennzeichnet, dass** in dem Erwärmungsschritt ausreichend Wärme angewendet wird, um im wesentlichen die gesamte Mischung dazu zu veranlassen, mineralisiert zu werden und einen monolithischen, mineralisierten Feststoff zu bilden.

13. Verfahren nach einem der Ansprüche 1 bis 10, ferner **dadurch gekennzeichnet, dass** das Material und der Mineralisierungszusatzstoff in dem Behandlungsbehälter gemischt werden.

14. Verfahren nach einem der Ansprüche 1 bis 10, ferner **dadurch gekennzeichnet, dass** das Material Wasser enthält und in dem Schritt der Wärmeanwendung die Mischung auf eine Temperatur erwärmt wird, die ausreichend ist, um im wesentlichen das gesamte Wasser abzudampfen, jedoch auf unter eine Temperatur, bei der ein Großteil der Mischung schmilzt.

15. Verfahren nach einem der Ansprüche 1 bis 10, ferner **dadurch gekennzeichnet, dass** das Material Wasser und flüchtige organische Verbindungen enthält, und in dem Schritt der Wärmeanwendung die Mischung auf eine Temperatur erwärmt wird, die ausreichend ist, um im wesentlichen das gesamte Wasser abzudampfen und im wesentlichen die gesamten flüchtigen organischen Verbindungen zu verflüchtigen, jedoch auf unter eine Temperatur, bei der ein Großteil der Mischung schmilzt.

16. Verfahren nach einem der Ansprüche 1 bis 10, ferner **dadurch gekennzeichnet, dass** in dem Schritt der Wärmeanwendung die Mischung auf eine Temperatur von über 400 °C erwärmt wird, jedoch auf unter eine Temperatur, bei der ein Großteil der Mischung schmilzt.

17. Verfahren nach einem der Ansprüche 1 bis 10, ferner **dadurch gekennzeichnet, dass** das Material Wasser und halbflüchtige organische Verbindungen enthält, und in dem Schritt der Wärmeanwendung die Mischung auf eine Temperatur erwärmt wird, die ausreichend ist, um im wesentlichen das gesamte Wasser abzudampfen und im wesentlichen die gesamten halbflüchtigen organischen Verbindungen zu verflüchtigen, jedoch auf unter eine Temperatur, bei der ein Großteil der Mischung schmilzt.

18. Verfahren nach einem der Ansprüche 1 bis 10, ferner **dadurch gekennzeichnet, dass** in dem Schritt der Wärmeanwendung die Mischung auf eine Temperatur im Bereich von 600 °C bis 850 °C erwärmt wird.

19. Verfahren nach einem der Ansprüche 1 bis 10, ferner **dadurch gekennzeichnet, dass** das Verfahren ein Hinzufügen eines Reduktionsmittels zu der Mischung umfasst.

20. Verfahren nach Anspruch 19, ferner **dadurch gekennzeichnet, dass** das Reduktionsmittel Kohlenstoff oder ein organisches Material umfasst.

21. Verfahren nach Anspruch 19, ferner **dadurch gekennzeichnet, dass** das Reduktionsmittel Zucker, Glykol, Glycerin, Ethylenkarbonat, Alkohole, andere kohlenstoffhaltige Verbindungen, oder eine Kombination von zwei oder mehreren davon umfasst.

22. Verfahren nach Anspruch 19, ferner **dadurch gekennzeichnet, dass** das Reduktionsmittel eine gasförmige Verbindung umfasst.

23. Verfahren nach Anspruch 19, ferner **dadurch gekennzeichnet, dass** das Reduktionsmittel Natriumsulfid, Kaliumsulfid, Kalziumsulfid, Eisensulfat, Hydrazin, Ameisensäure, Schwefelsäure, Zinndichlorid, andere metallreduzierende Mittel, oder eine Kombination von zwei oder mehreren davon umfasst.

24. Verfahren nach einem der Ansprüche 1 bis 10, ferner **dadurch gekennzeichnet, dass** das Material schwermetallhaltigen Abfall, schwefelhaltigen Abfall, halogenhaltigen Abfall, radionuklidhaltigen Abfall, asbesthaltigen Abfall, alkalimetallhaltigen Abfall, organische Verbindungen enthaltenden Abfall oder eine Kombination von zwei oder mehreren davon umfasst.

25. Verfahren nach einem der Ansprüche 1 bis 10, ferner **dadurch gekennzeichnet, dass** der Mineralisierungszusatzstoff so gewählt wird, dass ein monolithischer Feststoff erzeugt wird, der Feldspatoid-Mineralien, Aluminium und Silikat enthaltende Mineralien oder eine Kombination davon enthält.

26. Verfahren nach einem der Ansprüche 1 bis 10, ferner **dadurch gekennzeichnet, dass** der Mineralisierungszusatzstoff so gewählt wird, dass ein monolithischer Feststoff erzeugt wird, der kalziumreiche Mineralien, phosphatreiche Mineralien, titanreiche Mineralien, magnesiumreiche Mineralien, eisenreiche Mineralien, siliziumdioxidreiche Mineralien, aluminiumreiche Mineralien oder eine Kombination von zwei oder mehreren davon enthält.

27. Verfahren nach einem der Ansprüche 1 bis 10, ferner **dadurch gekennzeichnet, dass** der Behandlungsbehälter ein Deponiebehälter ist.

28. Verfahren nach Anspruch 27, ferner **dadurch gekennzeichnet, dass** der Mischungsschritt in dem Deponiebehälter stattfindet.

29. Verfahren nach einem der Ansprüche 3 bis 10, ferner **dadurch gekennzeichnet, dass** das Material Stickstoffoxid-Gruppen enthält, und dass der Zusatzstoff eine Zusammensetzung aufweist, um mindestens 50 % dieser Gruppen in Stickstoffgas umzuwandeln.

30. Verfahren nach Anspruch 1, 2 oder 29, ferner **dadurch gekennzeichnet, dass** der Zusatzstoff ein Reduktionsmittel ist zum Umwandeln von im wesentlichen allen dieser Gruppen in Stickstoffgas.

31. Verfahren nach Anspruch 1, 2 oder 29, ferner **dadurch gekennzeichnet, dass** der Zusatzstoff ein Kohlenstoff oder ein organisches Material umfassendes Reduktionsmittel ist.

32. Verfahren nach einem der Ansprüche 1 bis 9, ferner **dadurch gekennzeichnet, dass** das Material und der Zusatzstoff in einem getrennten Mischbehälter oder -gefäß (33) gemischt werden (27', 29'), um eine transferierbare Mischung bereitzustellen, und wobei der Behandlungsbehälter (24) vorgewärmt wird (16, 40) und die transferierbare Mischung in den vorgewärmten Behälter (24) injiziert wird (31, 35).

33. Verfahren nach Anspruch 32, wobei die transferierbare Mischung in den vorgewärmten Behälter (24) gesprüht wird (21, 23), um einen monolithischen, mineralisierten Feststoff zu bilden.

34. Verfahren nach einem der Ansprüche 1 bis 10, ferner **dadurch gekennzeichnet, dass** der Erwärmungsschritt durchgeführt wird während die Mischung unter einem zumindest teilweisen Vakuum (82) gehalten wird.

35. Verfahren nach einem der Ansprüche 1 bis 10, ferner **dadurch gekennzeichnet, dass** der Erwärmungsschritt bei einer Temperatur durchgerührt wird, die geringer ist als die Fusions- oder Schmelztemperatur von zumindest 50 % der Bestandteile der Mischung.

36. Verfahren nach Anspruch 10 oder 33, ferner **dadurch gekennzeichnet, dass** der monolithische Feststoff durch aufeinanderfolgende Schichten aus mineralisierten Feststoffen gebildet wird.

## Revendications

1. Procédé de stabilisation d'un matériau contenant des groupes d'oxyde d'azote, où ledit procédé comprend les étapes de mélange (27, 29) du matériau avec un additif de minéralisation pour former un mélange minéralisable à activation thermique, et d'application d'une chaleur suffisante (16, 40) audit mélange dans un récipient de traitement (24) pour minéraliser au moins une partie dudit mélange et former un solide monolithique minéralisé, où ladite étape d'application de chaleur (16, 40) chauffe ledit matériau oxyde contenant de l'azote à une température suffisante pour convertir au moins 50 % des groupes oxyde d'azote en gaz azoté.

2. Procédé de la revendication 1, **caractérisé en outre en ce que** ledit additif de minéralisation comprend du calcium, le phosphore, du magnésium, du silicium, de l'aluminium, un métal alcalin, du fer, du titane, un composé d'au moins un desdits éléments, un aluminosilicate, de l'argile, une combinaison de deux ou plusieurs d'entre ceux-ci.

3. Procédé de la revendication 1, **caractérisé en outre en ce que** ledit matériau comprend de l'amiante et ledit additif est de l'hydroxyde de sodium.

4. Procédé de la revendication 1, où ledit procédé comprend les étapes de mélange (27, 29) du matériau, et une solution caustique contenant un métal alcalin comme additif de minéralisation pour former un mélange minéralisable activé par la chaleur, et l'application d'une chaleur suffisante (16, 40) audit mélange dans un récipient de traitement (24) pour minéraliser au moins une partie dudit mélange et former un solide non fibreux minéralisé ayant une forme monolithique, où ledit matériau contient des fibres d'amiante et ladite solution caustique est autorisé à dissoudre au moins partiellement ladite amiante, de sorte que ledit mélange contient un résidu de ladite dissolution partielle, et ledit procédé comprend en outre une étape de mise en contact dudit résidu avec une solution acide pour dissoudre au moins partiellement ledit résidu avant ladite étape de.chauffage.

5. Procédé de la revendication 4, **caractérisé en outre en ce que**, avant ladite étape de mise en contact, ledit résidu est séparé dudit mélange et ledit résidu séparé est mis en contact avec ladite solution acide pour dissoudre au moins une partie de celui-ci et former une solution de résidu acide, et **en ce qu'**ensuite ladite solution de résidu acide est ajoutée audit mélange avant ladite étape de chauffage.

6. Procédé de la revendication 4, **caractérisé en outre en ce que** ledit procédé comprend une étape d'addition d'un second additif de minéralisation audit mélange, ledit second additif de minéralisation étant choisi pour permettre la formation dudit solide monolithique.

7. Procédé de la revendication 6, **caractérisé en outre en ce que** ledit deuxième additif de minéralisation comprend du calcium, du phosphore, du magnésium, du silicium, de l'aluminium, un métal alcalin, du fer, du titane, un composé d'au moins un desdits éléments, un composé aluminosilicate, de l'argile, ou une combinaison de deux ou plusieurs d'entre ceux-ci.

8. Procédé de la revendication 4, **caractérisé en outre en ce que** ledit procédé comprend la dissolution d'une première partie dudit matériau dans ladite solution caustique, la dissolution d'une seconde partie dudit matériau dans ladite solution acide, et la combinaison desdites solutions contenant des parties dudit matériaux pour former ledit mélange minéralisable activé par la chaleur.

9. Procédé de la revendication 8, **caractérisé en outre en ce que** ledit procédé comprend une étape d'ajout d'un deuxième additif de minéralisation audit mélange, et **en ce que** ledit deuxième additif comprend du calcium, du phosphore, du magnésium, du silicium, de l'aluminium, un métal alcalin, du fer, du titane, un composé d'au moins un desdits éléments, un composé aluminosilicate, de l'argile, ou une combinaison de deux ou plusieurs d'entre ceux-ci.

10. Procédé de la revendication 1, où le matériau et ledit additif sont mélangés dans un récipient de mélange séparé (33) pour fournir un mélange transférable, ledit récipient de traitement (24) est préchauffé (16, 40) et ledit mélange transférable est pulvérisé (21, 23) dans ledit récipient préchauffé (24) pour former un solide monolithique minéralisé.

11. Procédé de l'une quelconque des revendications 1 à 10, **caractérisé en outre en ce qu'**une chaleur suffisante est appliquée à ladite étape de chauffage pour provoquer la minéralisation de la majorité dudit mélange et former un solide minéralisé et monolithique.

12. Procédé de l'une quelconque des revendications 1 à 10, **caractérisé en outre en ce qu'**une chaleur suffisante est appliquée à ladite étape de chauffage pour provoquer pratiquement la minéralisation de la totalité dudit mélange et former un solide minéralisé et monolithique.

13. Procédé de l'une quelconque des revendications 1 à 10, **caractérisé en outre en ce que** ledit matériau et ledit additif de minéralisation sont mélangés dans le récipient de traitement.

14. Procédé de l'une quelconque des revendications 1 à 10, **caractérisé en outre en ce que** ledit matériau contient de l'eau et ladite étape d'application de chaleur chauffe ledit mélange à une température suffisante pour faire évaporer pratiquement la totalité de ladite eau, mais inférieure à une température à laquelle une majorité de ledit mélange fond.

15. Procédé de l'une quelconque des revendications 1 à 10, **caractérisé en outre en ce que** ledit matériau contient de l'eau et des composés organiques volatiles, et ladite étape d'application de chaleur chauffe ledit mélange à une température suffisante pour faire évaporer pratiquement la totalité de ladite eau et faire volatiliser pratiquement la totalité des composés organiques volatiles, mais inférieure à une température à laquelle une majorité dudit mélange fond.

16. Procédé de l'une quelconque des revendications 1 à 10, **caractérisé en outre en ce que** ladite étape d'application de chaleur chauffe ledit mélange à une température supérieure à 400 °C, mais inférieure à une température à laquelle une majorité dudit mélange fond.

17. Procédé de l'une quelconque des revendications 1 à 10, **caractérisé en outre en ce que** ledit matériau contient de l'eau et des composés organiques semi-volatiles, et ladite étape d'application de chaleur chauffe ledit mélange à une température suffisante pour faire évaporer pratiquement la totalité de ladite eau et faire volatiliser pratiquement la totalité des composés organiques semi-volatiles, mais inférieure à une température à laquelle une majorité dudit mélange fond.

18. Procédé de l'une quelconque des revendications 1 à 10, **caractérisé en outre en ce que** ladite étape d'application de chaleur chauffe ledit mélange à une température située dans la gamme de 600 °C à 850 °C.

19. Procédé de l'une quelconque des revendications 1 à 10, **caractérisé en outre en ce que** ledit procédé comprend l'ajout d'un agent réducteur audit mélange.

20. Procédé de la revendication 19, **caractérisé en outre en ce que** ledit agent réducteur comprend du carbone ou un composé organique.

21. Procédé de la revendication 19, **caractérisé en outre en ce que** ledit agent réducteur comprend du sucre, du glycol, du glycérol, du carbonate d'éthylène, des alcools, d'autres composés carbonés ou une combinaison de deux ou plusieurs d'entre ceux-ci.

22. Procédé de la revendication 19, **caractérisé en outre en ce que** ledit agent réducteur comprend un composé gazeux.

23. Procédé de la revendication 19, **caractérisé en outre en ce que** ledit agent réducteur comprend du sulfure de sodium, sulfure de potassium, sulfure de calcium, du sulfate de fer, de l'hydrazine, de l'acide formique, de l'acide sulfurique, du chlorure stanneux, d'autres agents réducteurs métalliques ou une combinaison de deux ou plusieurs d'entre ceux-ci.

24. Procédé de l'une quelconque des revendications 1 à 10, **caractérisé en outre en ce que** ledit matériau comprend des déchets contenant des métaux lourds, du sulfure, des halogènes, un radionucléide, de l'amiante, un métal alcalin, un composé organique ou une combinaison de deux ou plusieurs d'entre ceux-ci.

25. Procédé de l'une quelconque des revendications 1 à 10, **caractérisé en outre en ce que** ledit additif de minéralisation est choisi pour fabriquer des minéraux feldspathoïdes contenant un solide monolithique, des minéraux contenant de l'aluminium et du silicate ou une combinaison de ceux-ci.

26. Procédé de l'une quelconque des revendications 1 à 10, **caractérisé en outre en ce que** ledit additif de minéralisation est choisi pour fabriquer des minéraux riches en calcium contenant un solide monolithique, des minéraux riches en phosphate, des minéraux riches en titane, des minéraux riches en magnésium, des minéraux riches en fer, des minéraux riches en silice, des minéraux riches en aluminium ou une combinaison de deux ou plusieurs d'entre ceux-ci.

27. Procédé de l'une quelconque des revendications 1 à 10, **caractérisé en outre en ce que** ledit récipient de traitement est un récipient de récupération des déchets.

28. Procédé de la revendication 27, **caractérisé en outre en ce que** ladite étape de mélange se déroule dans le récipient de récupération des déchets.

29. Procédé de l'une quelconque des revendications 3 à 10, **caractérisé en outre en ce que** ledit matériau contient des groupes oxyde d'azote, et **en ce que** ledit additif a une composition permettant de transformer au moins 50 % desdits groupes en azote gazeux.

30. Procédé de la revendication 1, 2 ou 29, **caractérisé en outre en ce que** ledit additif est un agent réducteur permettant de transformer pratiquement la totalité desdits groupes en azote gazeux.

31. Procédé de la revendication 1, 2 ou 29, **caractérisé en outre en ce que** ledit additif est un agent réducteur contenant du carbone ou un composé organique.

32. Procédé de l'une quelconque des revendications 1 à 9, **caractérisé en outre en ce que** ledit matériau et ledit additif sont mélangés (27', 29') dans un récipient de mélange séparé (33) pour fournir un mélange transférable, où ledit récipient de traitement (24) est préchauffé (16, 40) et où le mélange transférable est injecté (31, 35) dans ledit récipient préchauffé (24).

33. Procédé de la revendication 32, où ledit mélange transférable est pulvérisé (21, 23) dans ledit récipient préchauffé (24) pour former un solide monolithique minéralisé.

34. Procédé de l'une quelconque des revendications 1 à 10, **caractérisé en outre en ce que** ladite étape de chauffage est effectuée alors que ledit mélange est maintenu sous un vide au moins partiel (82).

35. Procédé de l'une quelconque des revendications 1 à 10, **caractérisé en outre en ce que** ladite étape de chauffage se déroule à une température inférieure à la température de fusion ou de fonte d'au moins 50 % des constituants dudit mélange.

36. Procédé de la revendication 10 ou 33, **caractérisé en outre en ce que** ledit solide monolithique est formé par des couches successives de solides minéralisés.
